# EUROPEAN PATENT SPECIFICATION

(11) **EP 4 031 956 B1**
(45) Date of publication and mention of the grant of the patent: **28.10.2026**
(21) Application number: 20765030.0
(22) Date of filing: 07.09.2020
(51) Int. Cl.: G06F 3/01, G06F 3/0481

(54) **DEVICE AND METHOD FOR HAND-BASED USER INTERACTION IN VR AND AR ENVIRONMENTS**
VORRICHTUNG UND VERFAHREN ZUR HANDBASIERTEN BENUTZERINTERAKTION IN UMGEBUNGEN FÜR VIRTUELLE UND ERWEITERTE REALITÄT
DISPOSITIF ET PROCÉDÉ D'INTERACTION D'UTILISATEUR BASÉE SUR LA MAIN DANS DES ENVIRONNEMENTS RV ET RA

(30) Priority: 20.09.2019 EP 19306153
(43) Date of publication of application: 27.07.2022
(73) Proprietor: InterDigital CE Patent Holdings, SAS, 75017 Paris (FR)
(72) Inventor: LELIEVRE, Sylvain, 35576 Cesson-Sevigne (FR); SCHMOUKER, Philippe, 35576 Cesson-Sevigne (FR); MARVIE, Jean-Eudes, 35576 Cesson-Sevigne (FR)
(74) Representative: Interdigital
(86) International application number: PCT/EP2020/074950
(87) International publication number: WO 2021/052800

(56) References cited:
- EP-A1- 3 260 950
- WO-A1-2019/172678
- US-A1- 2013 135 353
- US-A1- 2014 282 274
- US-A1- 2018 143 693

## Description

### TECHNICAL FIELD

The present disclosure relates generally to user interfaces and in particular to a user interface for Virtual Reality (VR) and Augmented Reality (AR) environments.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

VR and AR technology provides an immersive experience to users running such applications on suitable displays such as smartTVs, PCs, projectors, head-mounted displays (HMDs), etc. Through a user interface, the user is typically able to interact with the VR or AR environment, for example to handle objects therein. To do this, it is necessary to receive user input, which for example can be done by user tracking systems using sensors (wearable or not) or cameras that detect color and depth. For instance, a connected smartTV equipped with a color/depth camera could be able to track the shape and the position of each element of the user's body, which could enable the use of hand gestures in a natural interaction system as described in for example US 2018/143693 A1 and US 2014/282274 A1. This could give a user a way of interacting with a AR or VR scene or object in for example a broadcast TV program, a content item from the Internet or content shared during a video conference.

Conventional user interfaces can overlay images of the user's hands, which makes interaction with buttons and other menu items relatively straightforward. Interaction with objects is more difficult since the objects do not always react as in the real world.

Another conventional solution provides on the screen indications of the user's hand position and enable the user to interact with a virtual object to zoom in/out and rotate the object.
EP 3260950 discloses a system in which a user may interact with a real object, e.g. a mixing console, which causes a virtual reality display to show the user's interaction.
WO 2019/172678 deals with the problem of differences between a device's field of view (FOV) and the user's real-world FOV in an AR environment. Different virtual objects can be given different priorities, with priority one taking precedence over the others so that lower priority objects are faded in the presence of priority one objects. Furthermore, a controller in the device's FOV is given priority zero, meaning that it cannot interact with any object. When the controller is moved to the user's real world FOV, priority zero dialog boxes are displayed.
US 2013/135353 discloses interpreting different head tilts of a user wearing a head-mounted-device (HMD) as different commands.

However, in particular when interacting with object, such user interfaces tend to be difficult to use, in particular for new users as they are not always intuitive.

It will thus be appreciated that there is a desire for a solution that addresses at least some of the shortcomings of user interfaces for AR and VR. The present principles provide such a solution.

### SUMMARY OF DISCLOSURE

The invention is defined by the appended independent claims. Further embodiments are defined by the dependent claims.

In a first aspect, the present principles are directed to a method method in a device for rendering a virtual reality or augmented reality environment. The method comprises in at least one hardware processor of the device rendering an overlay on a display, calculating a position of a centre indicator of the overlay based on detected positions of a user's hands, enabling at least one action based on the position of the centre indicator relative to a neutral zone, and performing, in response to user hand movement, an enabled action.

In a second aspect, the present principles are directed to a device for rendering a virtual reality or augmented reality environment, the device comprising at least one hardware processor configured to render an overlay on a display, calculate a position of a centre indicator of the overlay based on positions of a user's hands, enable at least one action based on the position of the centre indicator relative to a neutral zone, and perform, in response to user hand movement, an enabled action.

In a third aspect, the present principles are directed to a computer program product which is stored on a non-transitory computer readable medium and includes program code instructions executable by a processor for implementing the steps of a method according to any embodiment of the second aspect.

### BRIEF DESCRIPTION OF DRAWINGS

Features of the present principles will now be described, by way of non-limiting example, with reference to the accompanying drawings, in which:
Figure 1 illustrates a Virtual reality (VR) / augmented reality (AR) system according to an embodiment of the present principles;
Figure 2 illustrates a method according to an embodiment of the present principles;
Figure 3 illustrates a first example of such an overlay according to the present principles; and
Figure 4 illustrates a second example of such an overlay according to the present principles.

### DESCRIPTION OF EMBODIMENTS

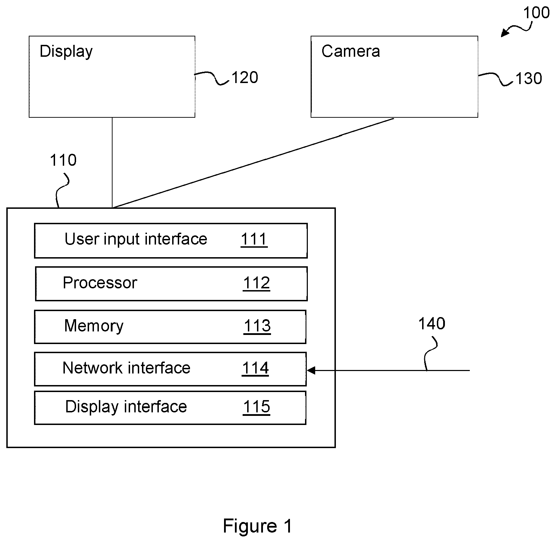

Figure 1 is a depiction of a virtual reality (VR) or augmented reality (AR) interactive system 100 in accordance with an illustrative embodiment. The interactive system 100 comprises a rendering device 110, a display 120 and a camera 130.

The rendering device 110, the display 120 and the camera 130 have been depicted as separate entities, but in different variants, they are combined in every possible way. For example the three entities can be incorporated into a single device such as a television, the display 120 and the rendering device 110 to be together while the camera 130 is separate, or for the rendering device 110 to be separate from a display including a camera.

The display 120 is operative to display to a user (not shown) video received from the rendering device. The display 120 can for example be a television, a computer screen, a head-mounted display (HMD), a tablet or a smartphone.

The camera 130, which can be a depth and colour camera, is operative to capture images and/or video of whatever is in front of its aperture. In interactive system 100, the camera 130 will typically be arranged to capture an environment including the user. Other gesture detectors detecting positions of a user's hands are also possible, such as one or more sensors worn by the user.

The rendering device 110 can for example be a computer, a set-top box, a gaming console, a tablet, a smartphone or the like. The rendering device 110 typically includes a user input interface 111, at least one hardware processor ("processor") 112, memory 113, a network interface 114 and an output interface, for example a display interface 115 or a speaker. The interfaces are at least partly implemented in hardware. It will be appreciated that parts of the device 110 that are not useful for understanding the present principles are not illustrated for the sake of brevity of description.

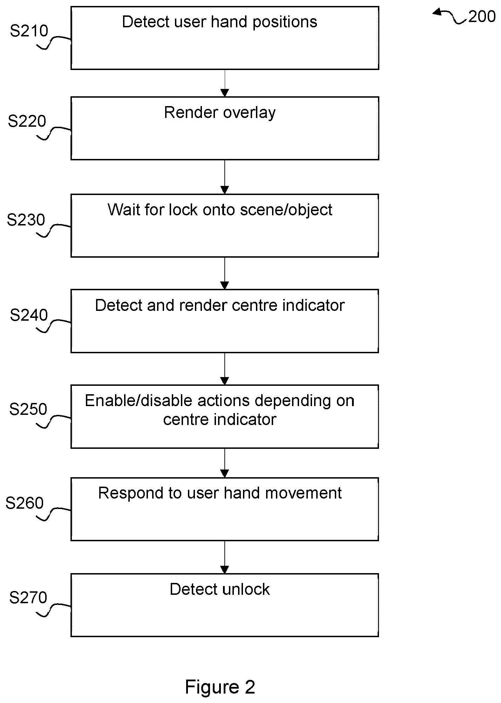

The user input interface 111 can be wireless and configured to receive input from an input device (not shown), but it can also be a touch screen, an interface to a keyboard and/or a mouse, and the like. The user input interface is configured to provide received input to the processor 112. The processor 112 is configured to execute program code instructions to perform a method according to the present principles described with reference to Figure 2. The memory 113 is configured to store the program code instructions for execution by the processor 112 and to store data. The network interface 114 can be wired or wireless and is configured to allow communication between the processor 112, via connection 140, and at least one device such as a server in an external network (not shown) to receive computer programs or content for display to a user. Such content may be video programs, which will be used as a non-limitative example. The output interface can be wired or wireless and configured to output content for display on the display 120. As already mentioned, in case the device 110 is a television, the display 120 is typically included in the device. It will be noted that a television may also have a display interface for displaying information on a separate screen (not shown).

A salient aspect of the present principles is the use of an overlay on top of the VR/AR scene.

Figure 2 illustrates a method according to an embodiment of the present principles. It is assumed that the user is "inside" the AR/VR scene, i.e. that the user is able to interact with the scene. For exemplary purposes, it is also assumed that the user has not interacted with any object in the scene.

In step S210 the user interface (120 in Figs. 1 and 2) of the interactive system (100 in Figure 1) detects the position of the user's hands to detect when the position matches a predefined position. The predefined position can be one out of a plurality of positions having the same meaning. An example of such a predefined position can be when the user extends the hands in front of the body.

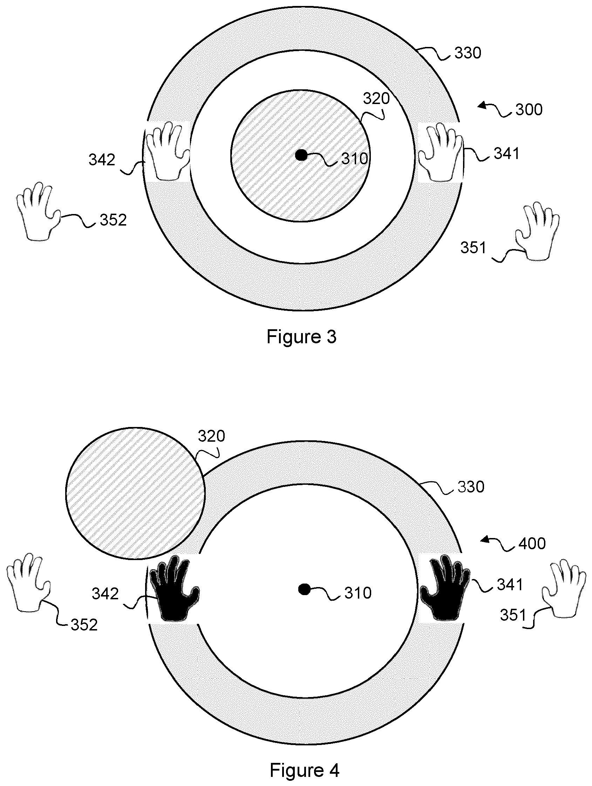

Upon detection of a match, the user interface renders, in step S220, a overlay on the AR/VR scene. Figure 3 illustrates a first example of such an overlay 300 according to the present principles. The overlay 300, which can be at least partly semitransparent, is in the example intended to be interacted with using two hands.

The overlay 300 can include a centre indicator 310, a neutral zone 320 (diagonally hatched in grey) and a crown 330 that includes a first and a second lock position 341, 342.

The centre indicator 310 indicates the centre of the crown 330. When the centre indicator 310 is located inside the neutral zone 320, certain user actions are inhibited, as will be described. Conversely, actions can be enabled only when the centre indicator 310 is located inside the neutral zone 320. The neutral zone 320 can be invisible (or more transparent) when the centre indicator 310 is located inside, and made visible or less transparent when the centre indicator 310 is outside.

The lock positions 341, 342, preferably hand-shaped, indicate where the user has to put its hands to lock or unlock a scene or object, as will be described.

The positions of the user's hands are represented by a right hand indicator 351 and a left hand indicator 352, illustrated in exemplary positions.

In step S230, the user interface waits for the user to lock on to an object by a specific hand gesture, which in the present example is putting the hands over (or at least essentially over) the lock positions 341, 342 for a given period of time; in other words, to place the hand indicators 351, 352 on top of the lock positions 341, 342 for a given period of time, which can be 0.5 seconds, 1 second, 1.5 seconds and so on.

In an embodiment, the lock positions 341, 342 blinks when there is no lock. In addition, the user interface can render text to inform the user how to lock on to an object.

Upon lock on to the object, the user interface detects and renders, preferably essentially continuously, in step S240, the position of the centre indicator 310. In particular, the user interface can detect whether the centre indicator 310 lies inside or outside the neutral zone 320. When locked, the centre indicator 310 typically corresponds, possibly with some lag, to the centre of the user's two hands, i.e. the centre of the hand indicators 351, 352. It is noted that the crown 330 typically follows the movement of the centre indicator 310.

Figure 4 illustrates a second example of an overlay 400 according to the present principles. The components of the overlay 400 are the same as those illustrated in the overlay 300 in Figure 3, the differences being that the lock positions 341, 342 have been filled to indicate lock on to the object or scene, and that the centre indicator 310 and the crown 330 have followed the user's hands so that the centre indicator 310 is now outside of the neutral zone 320 (it is noted that it in the Figure appears as if the neutral zone has moved).

In step S250, the user interface enables and/or disables user actions depending on the position of the centre indicator 310 relative to the neutral zone 320.

For example, when inside, enabled user actions can include:
- zoom in or out (i.e. bring an object closer or farther away) by respectively spreading or nearing the hands (possibly limited to when the hand indicators 351, 352 are at essentially the same height), and
- rotating the object through a corresponding circular movement of the hands (as if they were on a steering wheel), possibly limited to when the hand indicators 351, 352 are inside the crown 330; and
when outside, enabled user actions can include:
- rotating an object horizontally by moving the hands in a corresponding horizontal direction, or vertically by moving the hands in a corresponding vertical direction, or
- moving the camera (i.e. user's viewpoint) around in the scene.

As will be appreciated, the neutral zone can make the AR/VR scene less prone to for example accidental rotations since small horizontal or vertical hand movements will have no effect while the centre indicator 310 is in the neutral zone 320.

The user interface can indicate the possibilities by for example rendering icons indicative of enabled actions. Additionally, icons can be rendered in a different aspect (for example greyed or faded) for disabled actions, as is conventional in user interfaces. The icons can be rendered for a limited time period before disappearing or fading away. Preferably, the icons are rendered in a peripheral area so as not to hide much of the scene or object.

It is noted that other user actions, such as moving an object, can be implemented by the user interface.

In step S260, the user interface responds to user actions tracked through hand position detection. The user actions can include the ones described with reference to step S250. Further actions can include unlocking (to be described with reference to step S270), and hiding and displaying the overlay 300 when the user crosses the hands, i.e. brings the right hand to the left of the left hand (and it is noted that this can be disabled when the user performs a rotation through circular movement of the hands, so as to enable great circular rotation, e.g. 180°. Alternatively, the hand indicators 351, 352 can be prevented from switching sides so that the left is always to the left of or at the same vertical position as the right (except, for example, when performing a circular movement).

It is noted that horizontal or vertical rotation of an object can be temporarily disabled as the centre indicator 310 passes through the neutral zone 320 on its way to the other side.

In step S270, the user interface detects unlock of the object or scene. This can be done by the user putting the hand indicators 351, 352 on top of the lock positions 341, 342 for a given time. As can be seen, the user can do the same as for locking on to the object or scene. The unlock may also require that the center indicator 310 is in the neutral zone 320.

In a variant suitable for one-hand use, the overlay can include a single lock position over which the user should put a hand indicator for a given time in order to lock the scene or object, while unlocking is done the same way. In the variant, enabled user actions can be limited to moving an object.

It will thus be appreciated that the present principles can be used to provide a AR/VR system that provides a user with information on enabled user actions and also, through the use of the neutral zone, to provide an AR/VR experience that is less subject to 'jitter' caused by small hand movements.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for.

## Claims

1. A method (200) in a device (100) for rendering a virtual reality or augmented reality environment, the method comprising in at least one hardware processor (112) of the device (100):
rendering (S220) an overlay (300; 400) on a display (120);
in response to a specific hand gesture of a user performed for a given period of time, locking on to an object in the virtual reality or augmented reality environment; and
enabling (S250), for the locked-on object in the virtual reality or augmented reality environment, a first set of user actions only when a position of a centre indicator (310) of the overlay lies inside a neutral zone (320) of the overlay and enabling a second set of user actions only when the position of the centre indicator (310) lies outside the neutral zone (320), the position of the centre indicator calculated as a centre of detected positions of the user's hands.

2. The method of claim 1, further comprising rendering (S220) the overlay in response to detection of a match between detected hand positions and at least one predefined position.

3. The method of claim 1, further comprising performing (S260), in response to detected user hand movement, an enabled user action.

4. The method of claim 1, wherein the overlay (300; 400) comprises the centre indicator (310), the neutral zone (320), a crown (330) with first and second lock positions (341, 342), and right and left hand indicators (351, 352), the first and second lock positions (341, 342) indicating where the user should superpose the right and left hand indicators (351, 352) to lock onto an object or a scene, or to unlock a locked onto object or scene.

5. The method of claim 1, wherein the first action is one of zoom in, zoom out and rotation in a plane of the display, and the second action is one of horizontal rotation, vertical rotation, and movement.

6. The method of claim 1, further comprising rendering first icons, having a first visual aspect, indicative of enabled actions, and second icons, having a second visual aspect, for disabled actions.

7. A device (100) for rendering a virtual reality or augmented reality environment, the device (100) comprising at least one hardware processor (112) configured to:
render an overlay (300; 400) on a display (120);
in response to a specific hand gesture of a user performed for a given period of time, lock on to an object in the virtual reality or augmented reality environment, and
enable, for the locked-on object in the virtual reality or augmented reality environment, a first set of user actions only when a position of a centre indicator (310) of the overlay lies inside a neutral zone (320) of the overlay and enable a second set of user actions only when the position of the centre indicator (310) lies outside the neutral zone (320), the position of the centre indicator calculated as a centre of detected positions of the user's hands.

8. The device of claim 7, wherein the at least one hardware processor is further configured to calculate the position of the centre indicator based on detected positions of a user's hands.

9. The device of claim 7, wherein the first action is one of zoom in, zoom out and rotation in a plane of the display, and the second action is one of horizontal rotation, vertical rotation, and movement.

10. The device of claim 7, wherein the at least one hardware processor is further configured to render first icons, having a first visual aspect, indicative of enabled actions, and second icons, having a second visual aspect, for disabled actions.

11. The device of claim 7, wherein the device comprises at least one of the display (120) and a camera (130) configured to capture the positions of the user's hands.

12. The device of claim 7, wherein the at least one hardware processor is further configured to perform an enabled user action in response to detected user hand movement.

13. A non-transitory computer readable medium storing program code instructions that, when executed by a processor, implement the steps of a method according to at least one of claims 1 to 6.

## Patentansprüche

1. Verfahren (200) in einer Vorrichtung (100) zum Rendern einer Umgebung virtueller Realität oder erweiterter Realität, wobei das Verfahren in mindestens einem Hardwareprozessor (112) der Vorrichtung (100) umfasst:
Rendern (S220) einer Überlagerung (300; 400) auf einer Anzeige (120);
Herstellen einer Verriegelung auf ein Objekt in der Umgebung virtueller Realität oder erweiterter Realität als Reaktion auf eine spezifische Handgeste eines Benutzers, die während einer gegebenen Zeitdauer ausgeführt wird; und
Freigeben (S250) einer ersten Menge von Benutzerhandlungen für das Objekt in der Umgebung virtueller Realität oder erweiterter Realität, auf das verriegelt worden ist, nur, wenn eine Position eines Mittenanzeigers (310) der Überlagerung innerhalb einer Neutralzone (320) der Überlagerung liegt, und Freigeben einer zweiten Menge von Benutzerhandlungen nur, wenn die Position des Mittenanzeigers (310) außerhalb der Neutralzone (320) liegt, wobei die Position des Mittenanzeigers als Mittelpunkt der erfassten Positionen der Hände des Benutzers berechnet wird.

2. Verfahren nach Anspruch 1, das ferner das Rendern (S220) der Überlagerung als Reaktion auf die Detektion einer Übereinstimmung zwischen detektierten Handpositionen und mindestens einer vordefinierten Position umfasst.

3. Verfahren nach Anspruch 1, das ferner das Ausführen (S260) einer freigegebenen Benutzerhandlung als Reaktion auf die detektierte Benutzerhandbewegung umfasst.

4. Verfahren nach Anspruch 1, wobei die Überlagerung (300; 400) den Mittenanzeiger (310), die Neutralzone (320), einen Kranz (330) mit einer ersten und einer zweiten Verriegelungsposition (341, 342) und Anzeiger (351, 352) für die rechte und für die linke Hand umfasst, wobei die erste und die zweite Verriegelungsposition (341, 342) angeben, wo der Benutzer die Anzeiger (351, 352) für die rechte und für die linke Hand überlagern sollte, um eine Verriegelung auf ein Objekt oder eine Szene herzustellen oder eine solche Verriegelung aufzuheben.

5. Verfahren nach Anspruch 1, wobei die erste Handlung eine von Hereinzoomen, Herauszoomen und Drehung in einer Ebene der Anzeige ist und wobei die zweite Handlung eine einer horizontalen Drehung, einer vertikalen Drehung und einer Bewegung ist.

6. Verfahren nach Anspruch 1, das ferner das Rendern erster Icons, die einen ersten visuellen Aspekt, der freigegebene Handlungen angibt, aufweisen und zweiter Icons, die einen zweiten visuellen Aspekt aufweisen, für gesperrte Handlungen umfasst.

7. Vorrichtung (100) zum Rendern einer Umgebung virtueller Realität oder erweiterter Realität, wobei die Vorrichtung (100) mindestens einen Hardwareprozessor (112) umfasst, der dafür konfiguriert ist:
eine Überlagerung (300; 400) auf einer Anzeige (120) zu rendern;
als Reaktion auf eine spezifische Handgeste eines Benutzers, die während einer gegebenen Zeitdauer ausgeführt wird, auf ein Objekt in der Umgebung virtueller Realität oder erweiterter Realität zu verriegeln; und
für das Objekt in der Umgebung virtueller Realität oder erweiterter Realität, auf das verriegelt worden ist, eine erste Menge von Benutzerhandlungen nur freizugeben, wenn eine Position eines Mittenanzeigers (310) der Überlagerung innerhalb einer Neutralzone (320) der Überlagerung liegt, und eine zweite Menge von Benutzerhandlungen nur freizugeben, wenn die Position des Mittenanzeigers (310) außerhalb der Neutralzone (320) liegt, wobei die Position des Mittenanzeigers als Mittelpunkt der erfassten Positionen der Hände des Benutzers berechnet wird.

8. Vorrichtung nach Anspruch 7, wobei der mindestens eine Hardwareprozessor ferner dafür konfiguriert ist, die Position des Mittenanzeigers auf der Grundlage detektierter Positionen der Hände eines Benutzers zu berechnen.

9. Vorrichtung nach Anspruch 7, wobei die erste Handlung eine von Hereinzoomen, Herauszoomen und Drehung in einer Ebene der Anzeige ist und wobei die zweite Handlung eine einer horizontalen Drehung, einer vertikalen Drehung und einer Bewegung ist.

10. Vorrichtung nach Anspruch 7, wobei der mindestens eine Hardwareprozessor ferner dafür konfiguriert ist, erste Icons, die einen ersten visuellen Aspekt, der freigegebene Handlungen angibt, aufweisen und zweite Icons, die einen zweiten visuellen Aspekt aufweisen, für gesperrte Handlungen zu rendern.

11. Vorrichtung nach Anspruch 7, wobei die Vorrichtung mindestens eines der Anzeige (120) und einer Kamera (130), die zum Aufnehmen der Positionen der Hände des Benutzers konfiguriert ist, umfasst.

12. Vorrichtung nach Anspruch 7, wobei der mindestens eine Hardwareprozessor ferner dafür konfiguriert ist, als Reaktion auf eine detektierte Benutzerhandbewegung eine freigegebene Benutzerhandlung auszuführen.

13. Nichttransitorisches computerlesbares Medium, das Programmcodeanweisungen speichert, die, wenn sie durch einen Prozessor ausgeführt werden, die Schritte eines Verfahrens nach mindestens einem der Ansprüche 1 bis 6 implementieren.

## Revendications

1. Procédé (200) dans un dispositif (100) pour le rendu d'un environnement de réalité virtuelle ou de réalité augmentée, le procédé comprenant, dans au moins un processeur matériel (112) du dispositif (100) :
effectuer (S220) le rendu d'une superposition (300 ; 400) sur un écran (120) ;
en réponse à un geste manuel spécifique d'un utilisateur effectué pendant une durée donnée, l'établissement d'un verrouillage sur un objet dans l'environnement de réalité virtuelle ou de réalité augmentée ; et
l'activation (S250), pour l'objet verrouillé dans l'environnement de réalité virtuelle ou de réalité augmentée, d'un premier ensemble d'actions utilisateur uniquement lorsqu'une position d'un indicateur central (310) de la superposition se trouve à l'intérieur d'une zone neutre (320) de la superposition et l'activation d'un deuxième ensemble d'actions utilisateur uniquement lorsque la position de l'indicateur central (310) se trouve en dehors de la zone neutre (320), la position de l'indicateur central étant calculée comme le centre des positions détectées des mains de l'utilisateur.

2. Procédé selon la revendication 1, comprenant en outre le rendu (S220) de la superposition en réponse à la détection d'une correspondance entre les positions de mains détectées et au moins une position prédéfinie.

3. Procédé selon la revendication 1, comprenant en outre l'exécution (S260), en réponse à un mouvement de main de l'utilisateur détecté, d'une action utilisateur activée.

4. Procédé selon la revendication 1, dans lequel la superposition (300 ; 400) comprend l'indicateur central (310), la zone neutre (320), une couronne (330) avec des première et deuxième positions de verrouillage (341, 342), et des indicateurs de mains droite et gauche (351, 352), les première et deuxième positions de verrouillage (341, 342) indiquant où l'utilisateur doit superposer les indicateurs de mains droite et gauche (351, 352) pour établir un verrouillage sur un objet ou une scène, ou pour déverrouiller un objet ou une scène verrouillé.

5. Procédé selon la revendication 1, dans lequel la première action est l'un d'un zoom avant, d'un zoom arrière et d'une rotation dans un plan de l'écran, et la deuxième action est l'un d'une rotation horizontale, d'une rotation verticale et d'un déplacement.

6. Procédé selon la revendication 1, comprenant en outre le rendu de premières icônes, ayant un premier aspect visuel, indicatif des actions activées, et de deuxièmes icônes, ayant un deuxième aspect visuel, pour les actions désactivées.

7. Dispositif (100) pour le rendu d'un environnement de réalité virtuelle ou de réalité augmentée, le dispositif (100) comprenant au moins un processeur matériel (112) configuré pour :
effectuer le rendu d'une superposition (300 ; 400) sur un écran (120) ;
en réponse à un geste manuel spécifique d'un utilisateur effectué pendant une durée donnée, établir un verrouillage sur un objet dans l'environnement de réalité virtuelle ou de réalité augmentée ; et
activer, pour l'objet verrouillé dans l'environnement de réalité virtuelle ou de réalité augmentée, un premier ensemble d'actions utilisateur uniquement lorsqu'une position d'un indicateur central (310) de la superposition se trouve à l'intérieur d'une zone neutre (320) de la superposition, et activer un deuxième ensemble d'actions utilisateur uniquement lorsque la position de l'indicateur central (310) se trouve en dehors de la zone neutre (320), la position de l'indicateur central étant calculée comme le centre des positions détectées des mains de l'utilisateur.

8. Dispositif selon la revendication 7, dans lequel l'au moins un processeur matériel est en outre configuré pour calculer la position de l'indicateur central sur la base des positions détectées des mains d'un utilisateur.

9. Dispositif selon la revendication 7, dans lequel la première action est l'un d'un zoom avant, d'un zoom arrière et d'une rotation dans un plan de l'écran, et la deuxième action est l'un d'une rotation horizontale, d'une rotation verticale et d'un déplacement.

10. Dispositif selon la revendication 7, dans lequel l'au moins un processeur matériel est en outre configuré pour le rendu de premières icônes, ayant un premier aspect visuel, indicatif des actions activées, et de deuxièmes icônes, ayant un deuxième aspect visuel, pour les actions désactivées.

11. Dispositif selon la revendication 7, dans lequel le dispositif comprend au moins un élément choisi parmi l'écran (120) et une caméra (130) configurée pour capturer les positions des mains de l'utilisateur.

12. Dispositif selon la revendication 7, dans lequel l'au moins un processeur matériel est en outre configuré pour effectuer une action utilisateur activée en réponse à un mouvement de main de l'utilisateur détecté.

13. Support non transitoire lisible sur ordinateur sur lequel sont stockées des instructions de code de programme qui, lorsqu'elles sont exécutées par un processeur, mettent en œuvre les étapes d'un procédé selon au moins l'une des revendications 1 à 6.
